## Europäisches Patentamt
## European Patent Office
## Office européen des brevets

(11) Veröffentlichungsnummer: **0 117 557**
**B1**

(12) # EUROPÄISCHE PATENTSCHRIFT

(45) Veröffentlichungstag der Patentschrift:
**08.06.88**

(51) Int. Cl.⁴: **B 23 Q 3/00**

(21) Anmeldenummer: **84102003.5**

(22) Anmeldetag: **25.02.84**

(54) Werkstückpalette an Werkzeugmaschinen.

(30) Priorität: **28.02.83 CH 1095/83**

(43) Veröffentlichungstag der Anmeldung:
**05.09.84 Patentblatt 84/36**

(45) Bekanntmachung des Hinweises auf die Patenterteilung:
**08.06.88 Patentblatt 88/23**

(84) Benannte Vertragsstaaten:
**DE FR GB IT SE**

(56) Entgegenhaltungen:
**DE-A-3 127 495**
**FR-A-2 240 072**
**JP-A-55 070 543**
**US-A-4 065 988**
**US-A-4 185 812**

(73) Patentinhaber: **AG für industrielle Elektronik AGIE Losone bei Locarno, CH- 6616 Losone/Locarno (CH)**

(72) Erfinder: **Lothenbach, Michael, Dufourstrasse 15, CH- 6003 Luzern (CH)**
Erfinder: **Herzog, Peter, Schulgässli 3, CH- 6374 Buochs (CH)**

(74) Vertreter: **EGLI- EUROPEAN PATENT ATTORNEYS, Widenmayerstrasse 5, D-8000 München 22 (DE)**

**Beschreibung**

Die Erfindung betrifft eine Werkstückpalette zum Einspannen und Transportieren von Werkstücken an Werkzeugmaschinenanlagen, mit einer Spannvorrichtung zum Halten des Werkstücks, mit Führungsmitteln zur Herstellung einer Wirkverbindung mit Teilen der Werkzeugmaschinenanlage, und mit einer Schnellspannvorrichtung zum Anschluß an die Werkzeugmaschinenanlage. Eine derartige Werkstückpalette ist beispielsweise aus der EP-A2-37 135 bekannt.

Im Zusammanhang mit der serienmäßigen Bearbeitung von Werkstücken ist die Benutzung von Werkstückpaletten weit verbreitet, da diese im allgemeinen eine Verkürzung von Beschickungsarbeiten und damit von Vorbereitungszeit gestatten, insbesondere wenn die Werkstücke über mehrere Bearbeitungsstationen geführt werden müssen. Mit Hilfe solcher Spannpaletten werden außerdem die Nebenzeiten verkürzt, da während der Bearbeitung des Werkstücks auf einer Palette bereits ein neues Werkstück auf einer anderen Palette eingespannt bzw. vorbereitet werden kann.

Die aus der EP-A2-37 135 bekannte Werkstückpalette ist Teil eines Palettentransportsystems, bei dem zur Bearbeitung übliche Bohr- und ähnliche Werkzeuge verwendet werden, und daher ist die bekannte Palette auch nur mit einer üblichen Spannvorrichtung für von außen spannbare Werkstücke versehen. Als Führungsmittel dienen bei der bekannten Palette an deren Unterseite angeordnete Schienen, in welche Hebel eingreifen können. Ein Haken an der Palette ist zum Eingriff mit einer Klinke ausgebildet. Hierdurch wird wiederum die Palette an einem Schlitten festgelegt. Eine Zentrierung soll durch einen Bolzen erfolgen, der in das Zentrum eines Maschinentisches ragt, der wiederum Schlitze zur Aufnahme der Schienen aufweist.

Besondere Schwierigkeiten beim Einsatz bekannter Werkstückpaletten entstehen bei Verwendung an funkenerosiven Schneidanlagen. Mit derartigen Schneidanlagen, welche eine weggesteuerte, durchlaufende Drahtelektrode enthalten, können beispielsweise beliebig geformte prismatische Werkstücke gefertigt werden, wobei entweder das Werkstück aus einem größeren Materialstück ausgeschnitten wird oder umgekehrt die umgebende Außenform das Werkstück darstellt und das Innenteil als Verschnitt herausgetrennt wird. Die Bewegungsabläufe an derartigen Schneidanlagen sind weitgehend automatisiert, so daß sich solche Anlagen vorzüglich für die Serienbearbeitung von Werkstücken eignen. Die Verwendung von Werkstückpaletten an diesen Maschinen bedingt, daß sich die Werkstückpalette automatisch auf die Maschine laden läßt und dabei Positioniergenauigkeiten eingehalten werden können, die den hohen Präzisionsansprüchen des Werkzeugbaus und insbesondere den an sich möglichen engen Toleranzen entsprechen, die sich mit funkenerosiven Schneidanlagen erzielen lassen. Hinzu kommt die Schwierigkeit, daß bei der funkenerosiven Schneidbearbeitung das Werkstück im eingespannten Zustand für den durchlaufenden Schneiddraht frei zugänglich sein muß. Sämtliche Spannmittel für das Werkstück und sämtliche Führungsmittel zur Übergabe der Palette liegen bei der aus der EP-A2-37 135 bekannten Palette in der Bearbeitungszone, die für ein elektroerosives Bearbeiten erforderlich ist. Eine elektroerosive Bearbeitung ist daher mit der bekannten Palette nicht möglich.

Aus der DE-OS 3127 495 ist eine Palette zum Transportieren und Lagern von Werkstücken, insbesondere für automatische Werkstückbeschickungseinrichtungen bekannt, welche aus einem länglichen Grundkörper besteht. Dieser Grundkörper enthält Einsätze mit Öffnungen für die Werkstücke und eine in Längsrichtung des Grundkörpers verlaufendende Führungsnut. Diese Führungsnut wirkt mit einer Führungsschiene an der Werkstückbeschickungseinrichtung zusammen. Der entscheidende Nachteil dieser Einrichtung besteht darin, daß die Führungsnut den Bearbeitungsbereich des Werkstücks bzw. den Wirkbereich der Werkzeuge an der Werkzeugmaschine kreuzt. Dadurch ist ein freier Zugang, auch von unten, an das Werkstück nicht gewährleistet.

Es ist daher Aufgabe der vorliegenden Erfindung, eine Werkstückpalette anzugeben, die auf funkenerosiven Schneidanlagen einsetzbar ist und dabei das Handhaben der Werkstücke, sowie deren geordnetes Laden und Entladen für die automatische Bearbeitung auf den Werkzeugmaschinen erlaubt. Ferner soll eine störungsfreie Entsorgung von Bearbeitungsabfällen sichergestellt sein.

Die Aufgabe wird für von außen zu spannende Werkstücke durch die im Patentanspruch 1 definierten Merkmale gelöst und für von außen zu bearbeitende, nicht von außen spannbare Werkstücke durch die im Patentanspruch 2 definierten Merkmale. Vorteilhafte Weiterbildungen der Erfindung sind in den Unteransprüchen angegeben. Durch diese Maßnahmen wird einerseits die oben gestellte Aufgabe besonders wirkungsvoll und mit einfachen Mitteln gelöst und andererseits ein freier Zugang zu beiden Seiten des Werkstücks sichergestellt, der besonders für die einwandfreie Zu- und Abführung der Drahtelektrode an funkenerosiven Schneidanlagen von großem Vorteil ist.

Im folgenden werden Ausführungsbeispiele der Erfindung anhand der Zeichnungen näher beschrieben. Es zeigen:

Figur 1     eine Werkstückpalette mit einer Spanneinrichtung für Werkstücke, mit einer das Werkstück umgebenden Einspannung,

Figur 2    den Schnitt II-II gemäß Figur 1 mit eingesetztem Werkstück an einer funkenerosiven Schneidanlage,

Figur 3    eine Werkstückpalette mit Einspannung des Werkstückinnenteils

Figur 4    den Schnitt IV-IV gemäß Figur 3, und

Figur 5    die Werkstückpoletts gemäss den Figuren 1 und 2, mit zusätzlicher Ausfallstücksicherung.

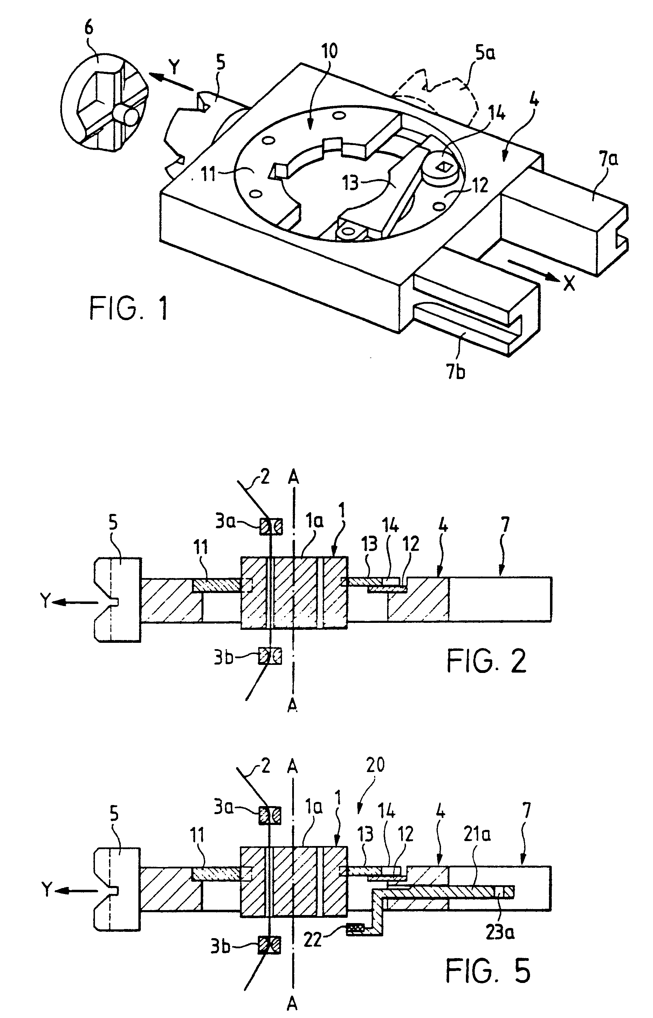

Das anhand der Figuren 1 und 2 dargestellte erste Ausführungsbeispiel dient zur Aufnahme eines Werkstücks 1, welches auf einer funkenerosiven Schneidanlage bearbeitet werden soll. In Figur 2 sind die zur Schneidanlage gehörende Drahtelektrode 2 sowie Drahtführungsmittel 3a, 3b zu erkennen, welche die nicht dargestellte Bearbeitungseinrichtung relativ zu dem zu bearbeitenden Werkstück fuehren. Das Werkstück 1 ist in eine Palette eingespannt, welche aus einem das Werkstueck umfassenden Palettenrahmen 4 besteht. Der Palettenrahmen 4 weist ein Präzisionsspannstück 5 auf, mit dessen Hilfe der Palettenrahmen 4 auf der Werkzeugmaschine in Richtung Y aufgenommen wird. Dazu dient eine Spanneirichtung 6, die im gezeigten Beispiel mit doppel-prismatischen Spannflächen ausgestattet ist, und welche sich automatisch betätigen lässt. Derartige präzise Spanneinrichtungen sind insbesondere in Verbindung mit funkenerosiven Werkzeugmaschinen praxisüblich. Im Beispiel der funkenerosiven Schneidanlage werden auf das Werkstück während des Bearbeitungsprozesses keine nennenswerten Kräfte ausgeuebt. Die gezeigten Spanneinrichtungen weisen in erster Linie eine hohe Positionerunqsgenauigkeit auf, sie müssen jedoch aus dem erwähnten Grund keine besonders hohen Kräfte aufnehmen. Ihre Festigkeit muss in erster Linie auf die in Betracht kommenden Werkstück- und Vorrichtungsgewichte abgestimmt sein. Das Präzisionsspannstück 5 kann an beliebiger Stelle des Palleterahmens 4 angebracht sein.

An einer zweiten Seitenfläche des Palettenrahmens 4 und bevorzugt in einer Übergaberichtung X quer zur Achse A-A der Spannöffnung für ein Werkstück 1 innerhalb des Palettenrahmens 4 befinden sich drei Flächen 7, die im gezeigten Ausführungsbeispiel als zwei mit Nuten versehene Stege 7a, 7b ausgebildet sind. Die freien Enden der Stege 7a, 7b weisen frontale Anschlagflächen auf. Die Greifflächen 7 dienen den Spannorganen eines nicht dargestellten Wechselarms oder einer nicht dargestellten Roboteinrichtung zum Anschluss im Moment des Auswechselns der Palette auf der Werkzeugmaschine. Die Greifflächen 7 treten mit den nicht dargestellten Greiforganen in kraftschlüssige Verbindung. Es können auch formschlüssige Rastvorrichtungen vorgesehen sein. Es wird damit ein Palettenwechsel in beliebigen Verscwenkbewegungen oder auch hängend aus dem Maschinenraum erlaubt.

Im Innern des Palettenrahmens 4 ist innerhalb der Öffnung, welche für das zu bearbeitende Werkstück 1 vorgesehen ist, ein Spanneinsatz 10 angebracht. Der Spanneinsatz 10 besteht vorzugsweise aus verschleissfestem Material. Seine Form entspricht weitgehend der äusseren Form des zu beabeitenden Werkstücks, wobei auf die besonderen Spannanforderungen für das Werkstück Rücksicht genommen werden kann. Der Spanneinsatz 10 weist einen Anschlag 11 auf sowie einen Gegenanschlag 12, wobei dieser über einen Spannbügel 13 mit Hilfe eines Drehexzenters 14 gegenüber dem Anschlag 11 verstellbar ist. Mit Hilfe dieser Einrichtung erfolgt die genaue Ausrichtung des Werkstücks innerhalb des Palettenrahmens 4.

In besonders vorteilhafter Weise lässt sich die genaue Form des Anschlags 11 innerhalb des Spanneinsatzes 10 vor dem Einsetzen eines Werkstücks 1 auf einer funkenerosiven Schneidanlage selbst bearbeiten. Dabei kann der Anschlag 11 zur Vermeidung der Addition verschiedener Fertigungstoleranzen von aneinander gefügten Teilen in nahezu beliebiger geometrischer Ausbildung mit sehr hoher Präzision hergestellt werden. Spanneinsätze 10, bestehend aus dem Anschlag 11 und dem Gegenanschlag 12 lassen sich als standardmässige, noch nicht endgültig ausgeformte Platten wirtschaftlich und in grossen Stückzahlen auf Lager halten. Durch das Bearbeiten dieser Spanneinsätze entsprechend den jeweiligen Spannkonturen der zu bearbeitenden Werkstücke wird eine kostengünstige und ausserst flexible Palletteneinrichtung erreicht.

Aus der Schnittdarstellung in Figur 2 ist der am Präzisionsspannstück 5 gehaltene Palettenrahmen zu erkennen, in dessen Bohrungsachse A-A das Werkstück 1 mit dem auszuschneidenden Ausfallstück 1a angeordnet ist.

Die Bearbeitung des Werkstücks erfolgt im gezeigten Ausführungsbeispiel durch die Drahtelektrode 2, die von den Führungsmitteln 3a, 3b der Werkzeugmaschine relativ zum eingespannten Werkstück geführt wird. Dabei ist das Werkstück 1 innerhalb des Palettenrahmens 4 durch den Spanneinsatz, bestehend aus dem Anschlag 11 und dem Gegenanschlag 12, sowie durch den Spannbügel 13 und den Drehexzenter 14 präzis gespannt.

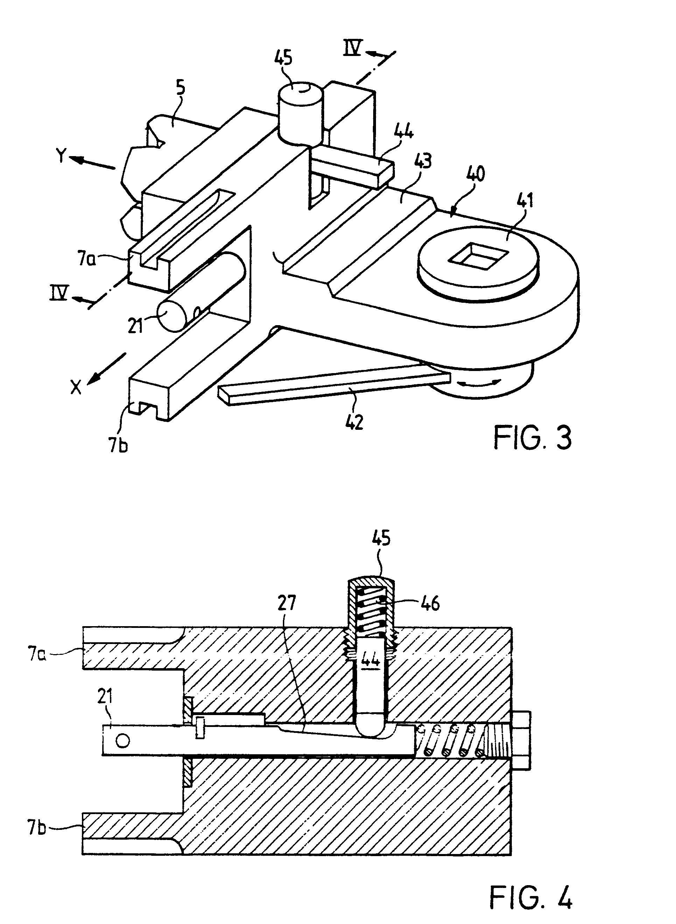

Das anhand der Figuren 3 und 4 gezeigte zweite Ausführungsbeispiel für eine Werkstückpalette eignet sich zum Einspannen von Werkstücken, die nicht von aussen umfassend gespannt werden können, sondern bei denen das Innenteil das Bearbeitungsergebnis und das äussere Stück des Werkstücks Abfall darstellt. In diesem Ausführungsbeispiel ist die Halterung als Tragarm 40 ausgebildet. Der Tragarm ist wiederum über ein Präzisionsspannstück 5 auf der Werkzeugmaschine befestigt, wobei die Halterung über Greifflächen 7 von einem nicht dargestellten Ladearm oder Roboter zugeführt bzw. abgeführt wird. Die Aussenabmessungen des Werkstück-Rohteils bestimmen die Abmessungen des Tragarms, der in seiner vordersten Zone einen drehbaren Flansch 41 trägt, der im Arm gelagert ist. Auf diesen Flansch 41 wird das Werkstück befestigt. Die Befestigung kann durch Schraub-oder Klebeverfahren erfolgen. Unter dem Tragarm 40 ist der Flansch 41 mit einer in den Figuren nicht dargestellten gerasteten Dreheinrichtung versehen, die beispielsweise über einen Hebel 42 betätigt wird. Ausser auf dem Flansch 41 ist das Werkstück während der Bearbeitung noch auf einer niveaugleichen Spannfläche 43 mit Hilfe eines Nocken 44 gespannt. Dabei wird der Nocken 44 von einer in einer Federkammer 45 angeordneten Feder 46 vorgeschoben. Der Drehflansch 41 weist in der Mitte eine Öffnung auf, durch welche von unten durch die rastbare Dreheinrichtung hindurch die Werkstückrohlinge im Zentrum gespannt werden können, und in welcher eine zentrische und eine Winkelorientierung für das Werkstück möglich ist.

Aufgrund der räumlichen Ausdehnung des Tragarms 40 kann in dieser Aufspannungsart kein in sich geschlossene Bearbeitungsweg in einem Arbeitsgang durchfahren werden. Es wird in einer ersten Phase soweit als möglich und soweit es die räumliche Ausdehnung der Drahtführungsmittel zulassen, ohne in Kollision mit dem Tragarm 40 zu geraten, der Profilumfang am Werkstück bearbeitet. Anschliessend wird, wie bereits in Verbindung mit Figur 1 beschrieben wurde, durch erneutes Einfahren des Ladearmes ein Schieber 21 betätigt, der über eine Konusfläche 27 den Nocken 44 gegen die Feder anhebt und damit die Klemmung des bearbeiteten Werkstücks aufhebt.

Über den ebenfalls vom Ladearm betätigten Hebel 42 und die damit in Vebindung stehende Klinkeneinrichtung kann nun der Flansch 41 zusammen mit dem darauf befestigten Werkstück gedreht werden. Der Hebel 42 wird so oft betätigt, bis die in der ersten Bearbeitungsphase geschnittene Werkstückkontur über den Tragarm zu liegen kommt und bis die verbliebene Restkontur im Wirkbereich der Schneidanlage liegt. Nach dem Wegschwenken des Ladearms klemmt der Nocken 44 den äusseren Teil des Werkstücks wieder fest ein. Die Schneidbearbeitung wird gegebenenfalls von einer neuen Startbohrung aus wieder aufgenommen und solange fortgesezt, bis die gewünschte Kontur fertig geschnitten ist. Durch den Nocken 44 wird der äussere Teil des Werkstücks auch nach dem vollständigen Ausschneiden sicher gehalten.

Stellt die Kontur, längs welcher der Schnitt am Werkstück vorgenommen wird, eine geschlossene Kurve dar, wird zwangsläufig ein Teil des Werkstücks als sogenanntes Ausfallstück lose. Das Ausfallstück kann sich beim Lösen verkanten und den Schneiddraht einklemmen, wodurch der Schneiddraht reissen kann. Das Ausfallstück kann aber auch herabfallen und dadurch andere Maschinenteile verklemmen oder die Funktion der Maschine behindern, insbesondere wenn diese längere Zeit unbeaufsichtigt bleibt. Um ein unkontrolliertes Veklemmen oder Herabfallen des Ausfallstücks zu verhindern, kann die Werkstückpalette zusätzlich mit einer Ausfallstücksicherung gemäss Figur 5 versehen sein.

Gemäss Figur 5 ist eine Ausfallstücksicherung 20 mit einem seitlichen Schieber 21a im Palettenrahmen vorgesehen. Der Schieber 21a lässt sich bis in den Bereich unterhalb des Werkstücks 1 bringen, wobei der am weitesten unter das Werkstück reichende Teil des Schiebers 21a mit einem Magneten 22 bestückt ist. Der Schieber 21a lässt sich vom an die Palette angeschlossenen Ladearm oder Roboterarm aus betätigen, wenn das Ausfallstück herabzufallen droht. Die Betätigung kann mit Hilfe von bekannten pneumatischen, hydraulischen oder elektrischen Einrichtungen vom angeschlossenen Ladearm oder Roboterarm aus über eine Kupplung 23a erfolgen. Vorzugsweise wird die Steuerung des Schneidvorgangs derart ausgelegt, dass Anfang und Ende der Schneidkurve dem Schieber 21a am Palettenrahmen 4 gegenüberliegt. Damit wird das Ausfallstück besonders effektiv und in der Regel symmetrisch gehalten. Vorzugsweise besteht der Magnet 22 aus elektrisch leitendem Material, wodurch der die Schnittstelle überbrückende Magnetgleichzeitig eine elektrische Brücke zwischen dem Ausfallstück und dem restlichen Werkstück darstellt, was einen besonders gleichmässigen Schnitt zur Folge hat. Nach Lösen der Werkstückpalette von der Werkzeugmaschine lässt sich der Schieber 21a an einem geeigneten Ort wieder durch eine gesteuerte Bewegung zurückziehen, worauf das Ausfallstück gelt am gewünschten Ort herabfallen kann, ohne irgendwelche Schäden oder Störungen heraufzubeschwören. Anstelle des beschriebenen einzigen Schiebers 21a können auch mehrere Schieber mit Magneten 22, oder auch ein Schieber mit mehreren Einzelmagneten vorgesehen sein.

**Patentansprüche**

1. Werkstückpalatte zum Einspannen und Transportieren von Werkstücken (1) an Werkzeugmaschinenanlagen, mit einer Spannvorrichtung (10) zum Halten des Werkstücks (1), mit Führungsmitteln (7a, 7b) zur Herstellung einer Wirkverbindung mit Teilen der Werkzeugmaschinenanlage, und mit einer Schnellspannvorrichtung (5) zum Anschluß an die Werkzeugmaschinenanlage, dadurch gekennzeichnet, daß die Werkstückpalette einen Palettenrahmen (4) aufweist, in dessen Inneren ein Spanneinsatz (10) vorgesehen ist, der eine Bearbeitungszone zur Bearbeitung des Werkstücks (1) aufspannt, außerhalb derer die Schnellspannvorrichtung (5) und die als Übergabehalter (7) ausgebildeten Führungsmittel (7a, 7b) am Palettenrahmen (4) angeordnet sind.

2. Werkstückpalette zum Einspannen und Transportieren von Werkstücken (1) an Werkzeugmaschinenanlagen, mit einer Spannvorrichtung (41) zum Halten des Werkstücks (1), mit Führungsmitteln (7a, 7b) zur Herstellung einer Wirkverbindung mit Teilen der Werkzeugmaschinenanlage, und mit einer Schnellspannvorrichtung (5) zum Anschluß an die Werkzeugmaschinenanlage, dadurch gekennzeichnet, daß die Werkstückpalette einen Tragarm (40) aufweist, in dessen vordersten Abschnitt, der in eine Bearbeitungszone zur Bearbeitung des Werkstücks (1) ragt, ein Spanneinsatz (41) vorgesehen ist, und daß die Schnellspannvorrichtung (5) und die als Übergabehalter (7) ausgebildeten Führungsmittel (7a, 7b) am Tragarm (40) außerhalb der Bearbeitungszone angeordnet sind.

3. Werkstückpalette nach Anspruch 1 oder 2, dadurch gekennzeichnet, daß die Führungsmittel (7a, 7b) eine Übergaberichtung (X) an die Teile der Werkzeugmaschinenanlage definieren.

4. Werkstückpalette nach Anspruch 1, dadurch gekennzeichnet, daß die Führungsmittel (7a, 7b) annäherungsweise in der Spannebene des Spanneinsatzes (10) liegen.

5. Werkstückpalette nach Anspruch 1, 3 oder 4, dadurch gekennzeichnet, daß die Führungsmittel (7a, 7b) mindestens näherungsweise in einer Ebene mit der Spannrichtung (Y) der Schnellspannvorrichtung (5) liegen.

6. Werkstückpalette nach Anspruch 5, dadurch gekennzeichnet, daß die Übergaberichtung (X) und die Spannrichtung (Y) in einer gemeinsamen Achse verlaufen.

7. Werkstückpalette nach Anspruch 1, 3, 4, 5 oder 6, dadurch gekennzeichnet, daß der Spanneinsatz (10) auswechselbar in dem Palettenrahmen (4) befestigt ist.

8. Werkstückpalette nach Anspruch 7, dadurch gekennzeichnet, daß der Spanneinsatz (10) aus mindestens einem auf die Konturen des Werkstücks (1) abgestimmten festen Anschlag (11) und einem gegen diesen spannbaren Gegenanschlag (12, 13) besteht.

9. Werkstückpalette nach Anspruch 1 oder einem der Ansprüche 3 bis 8, dadurch gekennzeichnet, daß mindestens ein am Palettenrahmen (4) geführter, steuerbarer Schieber (21a) mit einem Magneten (22), der unmittelbar unter die Bearbeitungszone bringbar ist, vorgesehen ist.

10. Werkstückpalette nach Anspruch 9, dadurch gekennzeichnet, daß der Schieber (21a) mit einer Kupplung (23a) zum Anschluß an ein Betätigungsorgan versehen ist.

11. Werkstückpalette nach Anspruch 10, dadurch gekennzeichnet, daß die Kupplung (23a) im Bereich des Übergabehalters (7) angeordnet ist.

12. Werkzeugpalette nach einem der Ansprüche 9 bis 11, dadurch gekennzeichnet, daß der Magnet (22) elektrisch leitend ist.

13. Werkstückpalette nach Anspruch 2 oder 3, dadurch gekennzeichnet, daß der Spanneinsatz (41) aus einem im Tragarm (40) drehbar gelagerten Drehflansch (41) und einer Arretiervorrichtung (43-45) für das Werkstück besteht.

14. Werkstückpalette nach Anspruch 13, dadurch gekennzeichnet, daß der Drehflansch (41) mit einem Klinkenbetätigungsmechanismus (42) versehen ist.

**Claims**

1. Workpiece pallet for gripping and transporting workpieces (1) at machine tool installations, with a gripping device (10) for holding the workpiece (1), with guide means (7a, 7b) for producing an operative coupling with parts of the machine tool installation, and with a quick-gripping device (5) for connection to the machine tool installation, characterised in that the workpiece pallet has a pallet frame (4), in the inside of which a gripping inset (10) is provided, which clamps a machining zone for machining the workpiece (1), outside of which the quick-gripping device (5) and the guide means (7a, 7b) developed as a delivery holder (7) are arranged at the pallet frame (4).

2. Workpiece pallet for gripping and transporting workpieces (1) at machine tool installations, with a gripping device (41) for holding the workpiece (1), with guide means (7a, 7b) for producing an operative coupling with parts of the machine tool installation, and with a quick-gripping device (5) for connection to the machine tool installation, characterised in that the workpiece pallet has a carrying arm (40), in the foremost section of which, which projects into a machining zone for machining the workpiece (1), a gripping inset (41) is provided, and in that the quick-gripping device (5) and the guide means (7a, 7b) developed as a delivery holder (7) are arranged on the carrying arm (40) outside the machining zone.

3. Workpiece pallet according to claim 1 or 2, characterised in that the guide means (7a, 7b) define a delivery direction (X) on the parts of the machine tool installation.

4. Workpiece pallet according to claim 1, characterised in that the guide means (7a, 7b) lie approximately in the gripping plane of the gripping inset (10).

5. Workpiece pallet according to claim 1, 3 or 4, characterised in that the guide means (7a, 7b) lie at least approximately in a plane with the gripping direction (Y) of the quick-gripping device (5).

6. Workpiece pallet according to claim 5, characterised in that the delivery direction (X) and the gripping direction (Y) run in a common axis.

7. Workpiece pallet according to claim 1, 3, 4, 5

0 117 557

or 6, characterised in that the gripping inset (10) is removably fastened in the pallet frame (4).

8. Workpiece pallet according to claim 7, characterised in that the gripping inset (10) consists of at least one fixed buffer (11) matched to the contours of the work piece (1) and a counter buffer (12, 13) which can be gripped against it.

9. Workpiece pallet according to claim 1 or one of claims 3 to 8, characterised in that at least one controllable slide (21a), guided at the pallet frame (4), is provided with a magnet (22) which can be brought directly under the machining zone.

10. Workpiece pallet according to claim 9, characterised in that the slide (21a) is provided with a coupling (23a) for connection to an actuating member.

11. Workpiece pallet according to claim 10, characterised in that the coupling (23a) is arranged in the region of the delivery holder (7).

12. Workpiece pallet according to one of claims 9 to 11, characterised in that the magnet (22) is electrically conductive.

13. Workpiece pallet according to claim 2 or 3, characterised in that the gripping inset (41) has a rotary flange (41) rotatingly mounted in the carrying arm (40) and a locking device (43-45) for the work piece.

14. Workpiece pallet according to claim 13, characterised in that the rotary flange (41) is provided with a ratchet operating mechanism (42).

**Revendications**

1. Palette porte-pièce pour monter et transporter des pièces (1) sur des installations de machine-outil, comportant un dispositif de bridage (10) pour tenir la pièce (1), des moyens de guidage (7a, 7b) pour réaliser une liaison positive avec des parties de l'installation de la machine-outil, et un dispositif de bridage rapide (5) pour le raccordement à l'installation des machines-outils, caractérisée en ce que la palette porte-pièce présente un cadre de palette (4) à l'intérieur duquel est prévue une garniture de bridage (10) qui bride une zone d'usinage pour l'usinage de la pièce (1) à l'extérieur de laquelle sont disposés, sur le cadre (4) de la palette, le dispositif de bridage rapide (5) et les moyens de guidage (7a, 7b) conçus comme supports de transfert (7).

2. Palette porte-pièce pour monter et transporter des pièces (1) sur des installations de machine-outil, comportant un dispositif de bridage (10) pour tenir la pièce (1), des moyens de guidage (7a, 7b) pour réaliser une liaison positive avec des parties de l'installation de la machine-outil, et un dispositif de bridage rapide (5) pour le raccordement à l'installation des machines-outils, caractérisée en ce que la palette porte-pièce présente un bras porteur (40) dans la portion la plus en avant duquel, portion qui pénètre dans la zone d'usinage pour l'usinage de la pièce (31), est prévue une garniture de bridage (41); et en ce que le dispositif de bridage rapide (5) et les moyens de guidage (7a, 7b), conçus comme supports de transfert (7), sont disposés autour du bras porteur (40), à l'extérieur de la zone d'usinage.

3. Palette porte-pièce selon la revendication 1 ou 2, caractérisée en ce que les moyens de guidage (7a, 7b) définissent une direction de transfert (X) contre les parties de l'installation de la machine-outil.

4. Palette porte-pièce selon la revendication 1, caractérisée en ce que les moyens de guidage (7a, 7b) se trouvent approximativement dans le plan de bridage de la garniture de bridage (10).

5. Palette porte-pièce selon la revendication 1, 3 ou 4, caractérisée en ce que les moyens de guidage (7a, 7b) se trouvent, au moins approximativement, dans un même plan avec la direction de bridage (Y) du dispositif de bridage rapide (5).

6. Palette porte-pièce selon la revendication 5, caractérisée en ce que la direction de transfert (X) et la direction de bridage (Y) sont dirigées selon un axe commun.

7. Palette porte-pièce selon la revendication 1, 3, 4, 5 ou 6, caractérisée en ce que la garniture de bridage (10) est fixée, avec possibilité d'échange, dans le cadre (4) de la palette.

8. Palette porte-pièce selon la revendication 7, caractérisée en ce que la garniture de bridage (10) est constituée d'au moins une butée fixe (11) adaptée au contour de la pièce (1) et d'une contre-butée (12, 13) que l'on peut serrer contre celle-ci.

9. Palette porte-pièce selon la revendication 1, ou l'un des revendications 3 à 8, caractérisée en ce qu'il est prévu au moins un coulisseau (21a) qui est guidé sur le cadre (4) de la palette, que l'on peut commander, avec un aimant (22) que l'on peut amener immédiatement sous la zone d'usinage.

10. Palette porte-pièce selon la revendication 9, caractérisée en ce que le coulisseau (21a) présente une accouplement (23a) pour raccordement à un organe de manoeuvre.

11. Palette porte-pièce selon la revendication 10, caractérisée en ce que l'accouplement (23a) est disposé dans la zone du support de transfert (7).

12. Palette porte-pièce selon l'une des revendications 9 à 11, caractérisée en ce que l'aimant (22) est électriquement conducteur.

13. Palette porte-pièce selon la revendication 2 ou 3, caractérisée en ce que la garniture de bridage (41) est constituée d'un collet tournant (41) porté, avec possibilité de rotation, dans le bras porteur (40) et d'un dispositif de blocage (43-45) pour la pièce.

14. Palette porte-pièce selon la revendication 13, caractérisée en ce que le collet tournant (41) comporte un mécanisme de manoeuvre à cliquet (42).

6

FIG. 1

FIG. 2

FIG. 5

FIG. 3

FIG. 4